# EUROPEAN PATENT SPECIFICATION

(11) **EP 4 119 113 B1**
(45) Date of publication and mention of the grant of the patent: **02.04.2025**
(21) Application number: 22170246.7
(22) Date of filing: 27.04.2022
(51) Int. Cl.: A61G 5/04

(54) **SMALL ELECTRIC VEHICLE**
KLEINES ELEKTROFAHRZEUG
PETIT VÉHICULE ÉLECTRIQUE

(30) Priority: 12.07.2021 JP 2021114890
(43) Date of publication of application: 18.01.2023
(73) Proprietor: Suzuki Motor Corporation, Hamamatsu-shi, Shizuoka 432-8611 (JP)
(72) Inventor: RAJA, Gopinath, Hamamatsu-shi, 432-8611 (JP); ANNO, Kyohei, Hamamatsu-shi, 432-8611 (JP)
(74) Representative: Plasseraud IP

(56) References cited:
- US-A- 4 809 804
- US-A1- 2008 250 889

## Description

### [Technical Field]

The present invention relates to a small electric vehicle.

### [Background Art]

Small electric vehicles including electric wheelchairs and cart-type electric rollators for users having difficulty in walking, such as the elderly, have been publicly known. An example of a small electric vehicle can be found in an instance in Patent documents 1, 2 or 3. Patent Document 1 discloses a small electric vehicle (electric wheelchair) that includes left and right motors that individually drive respective left and right driving wheels, and is configured such that the numbers of revolutions of left and right motors are determined from an operation position of joystick-type operation means, the vehicle goes forward when an operation element is tilted forward, it turns when the piece is tilted obliquely forward, it turns about a fixed position when the piece is tilted obliquely backward, and it stops when the piece is tilted straight backward.

### [Citation List]

### [Patent Document]

[Patent Document 1] JP 2014-064620 A
[Patent Document 2] US 4 809 804 A
[Patent Document 3] US 2008/250889 A1[Summary of Invention]

### [Problems to be Solved by the Invention]

As for the small electric vehicle as described above, the speed (speed difference between left and right driving wheels) is determined by the operation position of the joystick-type operation element. Accordingly, for example, in a case of turning at a slow speed, the operation element is required to be held at an intermediate operation position, which leads to a problem for a user having low proficiency in driving at an intended speed on a route. Even with the same vehicle speed, the user sometimes feels as if going fast or slow, depending on the proficiency of the user and the travel environment. It is meaningful for the user to be able to change the setting of the traveling characteristics, including the maximum speed, through a secure method.

The present invention has been made in view of the aforementioned points of the conventional art, and it has as an object to provide a small electric vehicle capable of securely switching the setting of the traveling characteristics, including the maximum speed, through a simple operation.

### [Means for Solving the Problems]

To solve the problems, a small electric vehicle according to the present invention includes:
a vehicle body that has a forward and backward direction and a width direction;
left and right driving wheels provided apart in the width direction of the vehicle body;
free wheels provided apart from the left and right driving wheels in the forward and backward direction of the vehicle body;
left and right motors connected respectively to the left and right driving wheels in an individually power-transmissible manner;
an operation unit that includes a joystick-type operation element;
a control unit that controls the left and right motors according to an amount of operation on the operation element; and
a travel permission switch that permits control of the left and right motors through the operation element,
wherein the control unit is configured:
in an on state of the travel permission switch, to control the left and right motors based on a target vehicle speed provided by an operation position of the operation element; and
in an off state of the travel permission switch and when the operation element is subjected to a tilting operation for a predetermined time period, to activate a control parameter selection mode and allow at least one control parameter including a maximum speed to be changed.

### [Advantageous Effects of Invention]

The small electric vehicle according to the present invention can activate the control parameter selection mode (e.g., a maximum speed selection mode) and change the control parameter including the maximum speed, by applying a tilting operation for a predetermined time period to the operation element in the off state of the travel permission switch as described above. Accordingly,
(i) The traveling characteristics (e.g., the maximum speed) depending on the proficiency of the user and traveling environment such as indoor and outdoor conditions and road surface conditions can be easily and securely set by the user.
(ii) Since the operation element for traveling is used for the control parameter selection operation, no dedicated selection switch or the like is required. This reduces the cost and is advantageous for preventing an erroneous operation on a dedicated switch.
(iii) Only in the off state of the travel permission switch, the control parameter selection mode is activated. In a drivable state, the control parameter selection mode is not activated. Consequently, even while the operation element for traveling is used for the control parameter selection operation, false recognition as a selection operation and unintentional starting, or unintentional change of the control parameter during traveling or in the drivable state are prevented.

### [Brief Description of Drawings]

[Figure 1] Figure 1 is a side view showing a small electric vehicle.
[Figure 2] Figure 2 is a block diagram showing a control system of the small electric vehicle.
[Figure 3] Figure 3 is a block diagram showing selection control of a speed map and travel control.
[Figure 4] Figure 4 is a schematic plan view showing a selection operation and a switching indication of the speed map.
[Figure 5] Figure 5 is a map showing a relationship between a joystick operation region, and a target vehicle speed/target vehicle angular velocity.
[Figure 6] Figure 6 is a flowchart showing the selection control of the speed map.

### [Mode for Carrying Out the Invention]

Hereinafter, embodiments of the present invention are described in detail with reference to the drawings.

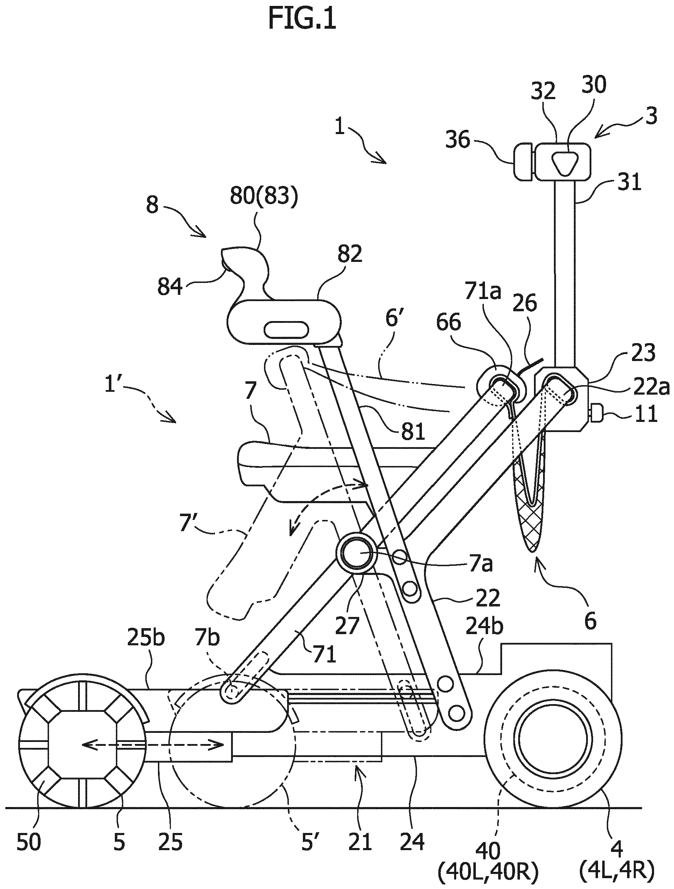

In Figure 1, an electric vehicle 1 according to an embodiment of the present invention includes a vehicle body 2 made up of a mobile base 21 (lower traveling body), and an upper frame 22 provided to stand from a rear part (rear-side base 24) of the mobile base 21, and is usable in a small electric vehicle mode (riding mode 1) indicated by solid lines in the diagram, and in a rollator mode (1') indicated by chain double-dashed lines in the diagram.

The mobile base 21 includes: the rear-side base 24 (main body part) provided with left and right driving wheels 4 (rear wheels), and the upper frame 22; and a front-side base 25 provided with left and right driven wheels 5 (front wheels). The front-side base 25 is joined to the front side of the rear-side base 24 slidably in the front and rear direction. The mobile base 21 is configured such that the wheelbase is expandable and contractible.

The left and right driving wheels 4 are independently driven respectively by left and right motor units 40 (40L and 40R) mounted on the rear-side base 24. The left and right driven wheels 5 is made up of free wheels (omni wheels, or omnidirectional wheels) including many rotatable rollers 50 at tread parts around axes in circumferential directions. As described later, the electric vehicle 1 can be steered, braked, and driven by controlling only the left and right motor units 40L and 40R.

The upper frame 22 has an inverted U form or a gate shape formed by joining upper ends of a pair of left and right side frames provided to stand upward from both the left and right sides of the rear-side base 24, with a horizontal part 22a extending in the vehicle width direction. A lower end part of a stem 31 of a rear handle 3 is rigidly coupled to a coupling part 23 at the center of the horizontal part 22a in the vehicle width direction, and a seat backrest 6 is supported at the coupling part 23.

The rear handle 3 is formed in a T bar shape that has a pair of grip parts extending left and right from a connection portion 32 with the upper end of the stem 31. At the left and right grip parts of the rear handle 3, grip sensors 30 that detect a state of gripping (hands on) by a user (or an assistant) are provided. Touch sensors, such as capacitance sensors or pressure-sensitive sensors, can be used as the grip sensors 30. The left and right grip parts of the rear handle 3 serve as an operation unit in a case of use by the user alone in the rollator mode (1'), and in a case in which an assistant or the like operates the electric vehicle in a case in which the user is seated on the seat 7. Note that at the front of the connection portion 32 at the center of the rear handle 3, a seat backrest 36 serving as a seatback for the user in the riding mode (1) is provided. Although omitted in Figure 1, an electromagnetic brake release switch 34, and a speaker 35 are provided on the connection portion 32 at the center of the rear handle 3.

Base parts of support frames 81 for armrests 82 are fixed at bent parts at the middle of the upper frame 22 (side frames) in the height direction. A joystick 83, which constitutes an operation element of a riding mode operation unit 8, is provided at a front end part of the armrest 82 on the right side, which is a deeper side in the Figure 1.

A two-axis joystick that can be tilted to the front, rear, left, and right, and allows an output to be obtained depending on a tilted angle, or a multi-axis joystick involving this function, may be used as the joystick 83. A non-contact joystick that uses a Hall sensor is preferable. The joystick 83 is configured such that an urging force (a restoring force or an operational reaction force) toward a neutral position depending on the tilted angle is applied, by an urging member (spring, etc.), not shown. In a state in which no operational force is applied, that is, a state in which the hand of the user is off the joystick 83, the joystick returns by itself to the neutral position (operation origin). Control of the left and right motor units 40 (40L and 40R) through an operation on the joystick 83 is described later.

The grip part having the same shape as the joystick is provided at a front end part of the armrests 82 on the left side, which is a near side in Figure 1, and a display unit 80 is provided on an upper surface thereof. A travel permission switch 84 for permitting control of traveling through an operation on the joystick 83, i.e., control of the left and right motors 40L and 40R, is provided on the front surface of the grip part.

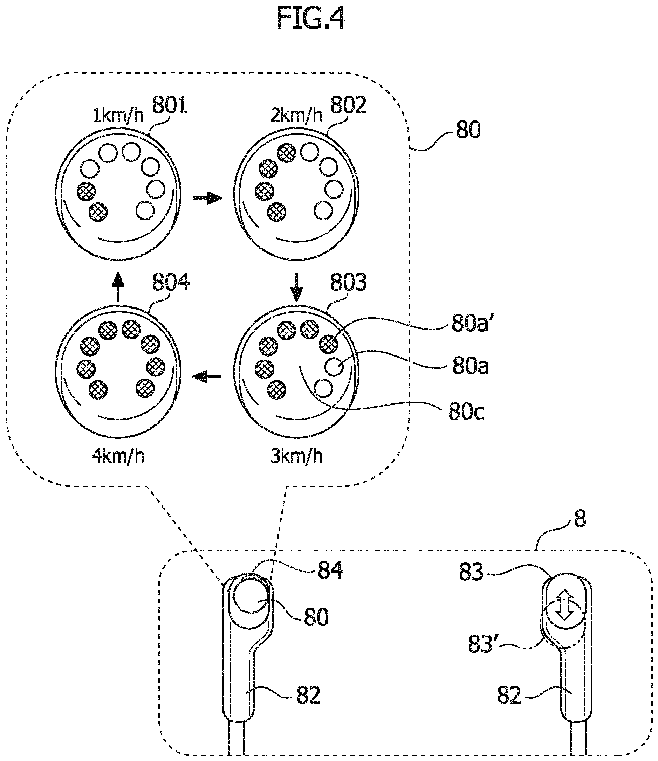

As shown in Figure 4, the display unit 80 is a digital indicator provided with a light emitter that includes a plurality of display segments 80a (eight segments in the shown example). The light emitter includes light emitting elements, such as LEDs. In the shown example, the display segments 80a are arranged in an arc shape, function as a level indicator that indicates increase in the displayed value by increase in the number of lights in the clockwise direction, are capable of displaying the remaining battery charge level, and cause a speed map (an identifier corresponding to the maximum speed) selected in a speed selection mode, described later, to be displayed. Note that a display region 80c for displaying characters, icons and the like that indicate currently displayed functions (the remaining battery charge, the maximum speed, etc.) may be provided at the center of the display region. The entire display unit 80 may be made up of a digital display (an LCD, OLED, etc.).

At a pivot support part 27 that protrudes forward from the bent parts of the upper frame 22 (side frames), movable frames 71 serving as a structure of supporting the seat 7 (seat cushion) are pivotably supported by a shaft 7a in the vehicle width direction. Meanwhile, the lower ends of the movable frames 71 are rotatably and slidably joined to the front-side base 25 (pins) via the joining parts 7b (slots).

According to the configuration described above, when the seat 7 at a seating position is turned downward ahead from the riding mode (1) indicated by the solid lines in the diagram to a folded position (7') as indicated by chain double-dashed lines in the diagram, the front-side base 25 is slid backward in an interlocking manner, the mobile base 21 is shortened, and the mode becomes a rollator mode (1'), which allows user operation while standing and walking with the rear handle 3 being gripped.

Conversely, when the seat (7') at the folded position is moved from the rollator mode (1') to the seating position 7 by turning upward behind, the front-side base 25 slides forward, the mobile base 21 is elongated, and the mode becomes the riding mode (1). In this state, an upper surface 25b of the front-side base 25 moved ahead of a tray 24b can be used as a footrest for a passenger.

Note that locking mechanisms (locking pins or the like urged by urging members, such as springs) that lock the front-side base 25 at each of an elongated position and a shortened position are provided in the mobile base 21, in which a vehicle state detection sensor 28 (mechanical switch, etc.) that detects the locked state in each position is attached. Furthermore, urging members (springs, etc.) for urging toward the intermediate position (in a release direction) at each of the elongated position and the shortened position are provided. Release tags 26 joined to the locking mechanisms through Bowden cables are provided at horizontal parts 71a of the upper end of the movable frames 71.

Accordingly, the configuration is made such that when the release tags 26 are pulled at any of the elongated position and the shortened position and the locking mechanisms are released, the vehicle body 2 is at the intermediate position by being urged by the urging members, and when, from this state, the seat 7 (movable frames 71) is turned forward/backward from the intermediate position against urging by the urging members, the locking mechanisms are locked at the elongated position/shortened position of the front-side base 25.

As shown in Figure 1, a net-shaped baggage carrier 6 that is folded (6') in the riding mode (1), and is expanded and ready for use in the rollator mode (1') is provided between horizontal parts 22a of the upper frame 22 and the horizontal parts 71a of the movable frames 71. A cushion 66 for shock-absorbing for the hip of the user seated on the seat 7 in the riding mode (1) against the horizontal parts 71a of the movable frames 71 is provided at joining parts to the movable frames 71 (horizontal parts 71a) at the front end part of the baggage carrier 6.

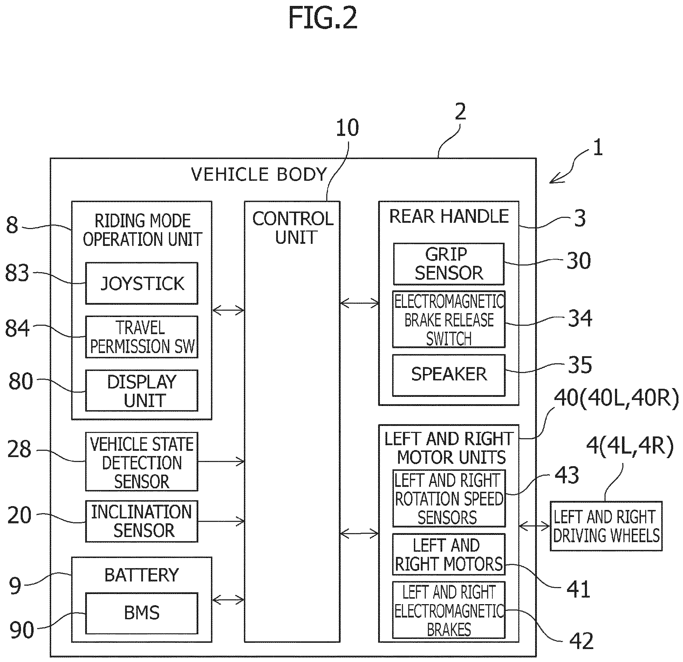

Figure 2 is a block diagram showing a control system of the electric vehicle 1. The electric vehicle 1 includes a battery 9 that supplies power to the left and right motor units 40 (40L and 40R), and a control unit 10 that controls the left and right motor units 40 (40L and 40R). The control unit 10 has an interlock function of executing control for each of the riding mode (1) and the rollator mode (1') in the locked state at the corresponding position detected by the vehicle state detection sensor 28.

In the riding mode (1), the grip sensors 30 are disabled, the control unit 10 is configured to control the speeds of the left and right motor units 40 (40L and 40R) on the basis of a control map, described later, in response to an operation (amount of operation, and operation direction) on the joystick 83, which constitutes the riding mode operation unit 8, when the travel permission switch 84 is turned on, and allows drive operations that include going forward, backward, turning, and braking, and stopping of the electric vehicle 1.

On the other hand, in the rollator mode (1'), the riding mode operation unit 8 is disabled, the control unit 10 controls the torques of the left and right motor units 40 (40L and 40R) on the basis of detection information from the inclination sensor 20, the left and right rotation speed sensors 43 and the like and of a predetermined control map. Note that when an inclination equal to or greater than a predetermined threshold is detected by the inclination sensor 20, a compensation torque for compensating for the gravity (load), which is applied depending on the inclination, is superimposed on the torque command value. The grip sensor 30 only detects a grip (hands on/off) on the rear handle 3 by the user, and is not involved in the torque control of the motor units 40.

The control unit 10 includes: a computer (microcomputer) made up of a ROM that stores a program and data for executing control in each of the modes, a RAM that temporarily stores a computation processing result, a CPU that performs computation processes and the like; and a power source circuit that includes drive circuits (motor drivers) for the left and right motors 41, and a relay that turns the power of the battery 9 on and off.

The left and right motor units 40 (40L and 40R) each include a motor 41, an electromagnetic brake 42 that locks the rotor of the corresponding motor 41, and a rotational position sensor (43) that detects the rotational position of the corresponding motor 41. Drive shafts of the motors 41 are connected to the respective driving wheels 4 (4L and 4R) via reduction gears, not shown, in a power-transmissible manner.

The left and right motors 41 are made up of brushless DC motors that switch the currents in coils in corresponding phases in the drive circuits to support the phases of rotors detected by the rotational position sensors (43). In the riding mode (1), the rotational position sensors (Hall sensors) are used as vehicle speed sensors (43) that detect the actual speed of the electric vehicle 1. In the rollator mode (1'), the rotational position sensors are used as the rotation speed sensors 43.

The drive circuits for the left and right motors 41 include current sensors that detect coil currents. The coil currents correspond to the torques of the left and right motors 41. The control unit 10 executes the torque control of the left and right motors 41 by controlling the coil currents through PWM control (pulse width modulation control) or the like.

Preferably, the electromagnetic brakes 42 are negative actuated type electromagnetic brakes that lock the drive shafts of the motors 41 in an unexcited state, and release the locking in an excited state. By adopting the negative actuated type electromagnetic brakes, the electric vehicle 1 can be securely stopped when the key is turned off or at a stop without consuming power.

On the other hand, to cause the locks of the electromagnetic brakes 42 to be released and allow the electric vehicle 1 to be movable in case of urgency or emergency, for example, in a case in which it is intended to move the electric vehicle 1 without using the power of the motors 41, or in an undrivable case due to reduction in remaining battery charge, the electromagnetic brake release switch 34 is provided as a forcible release means for the electromagnetic brakes 42. The electromagnetic brake release switch 34 is provided adjacent to the grip part of the rear handle 3, but is operable irrespective of detection of gripping of the grip sensor 30.

The inclination sensor 20 is implemented on a circuit board of the control unit 10 mounted in the mobile base 21 (rear-side base 24) of the vehicle body 2. A two-axis inclination sensor or an acceleration sensor that detects the inclination in the front and rear direction of the vehicle body 2 (pitch angle P) and the inclination in the lateral direction (roll angle R), or a multi-axis inertial sensor in which an angular acceleration sensor (gyroscope sensor) is additionally integrated with the aforementioned sensor is usable. Preferably, when an inclination having a predetermined threshold or more is detected by the inclination sensor 20, the control unit 10 is configured to correct the target vehicle speed and the target vehicle angular velocity so as to at least partially compensate for the gravity (load), which is applied depending on inclination.

The battery 9 is a secondary battery, such as a lithium-ion battery, mounted in the mobile base 21, and may be configured as a detachable battery pack so as to be easily chargeable from a commercial power source or the like. The battery 9 includes a BMS 90 (battery management unit) for monitoring the input and output current, total voltage, remaining capacity and the like, and managing the state of the battery.

The BMS 90 has a function of obtaining the remaining capacity (SOC) on the basis of the integrated value of the input and output current (cumulative power consumption). The remaining capacity obtained by the BMS 90 is stored in the control unit 10, and it is displayed on the display unit 80. The control unit 10 is configured to prompt, through the display unit 80, the user to perform charging when the remaining capacity obtained from the BMS 90 becomes less than a predetermined threshold.

### Basic travel control in riding mode

According to the electric vehicle 1 configured as described above, when the travel permission switch 84 is turned on in the riding mode (1), the rotation speeds of the left and right motors 41 (40L and 40R) are controlled based on the operation (the amount of operation, and the operation direction) on the joystick 83 by the user. At this time, the target rotation speeds of the left and right motors 41 (40L and 40R) are not determined directly from the operation position of the joystick 83. Instead, the target vehicle speed (straight traveling speed) based on the operation position of the joystick 83, and the target vehicle angular velocity based on the left and right direction component of the operation position of the joystick 83 are separately calculated. Based on them, the target rotation speeds of the left and right motors 41 (40L and 40R) corresponding to the rotation speeds of the left and right driving wheels 4 (4L and 4R) are calculated.

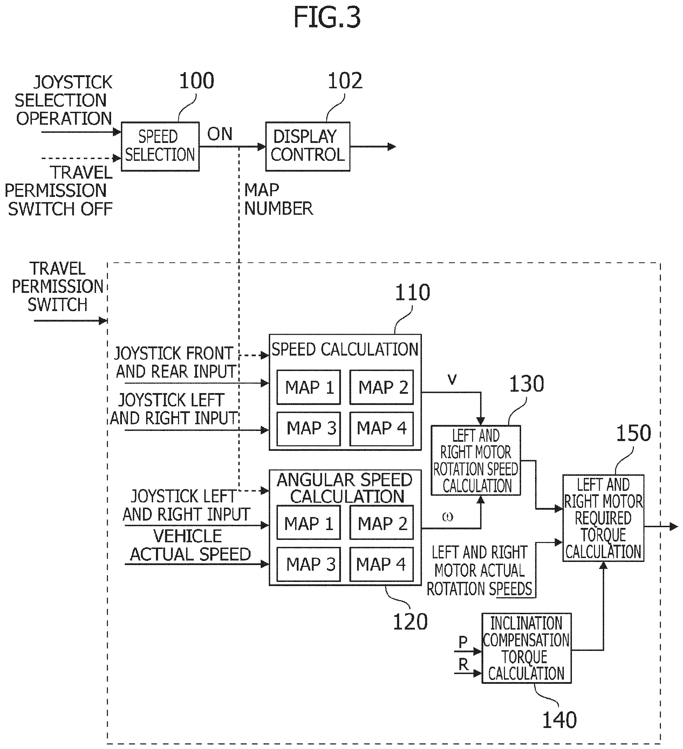

That is, as shown in the block diagram of Figure 3, for the target vehicle speed calculation block 110, not only inputs in the front and rear direction through the joystick 83, but also inputs in the left and right direction are used. Accordingly, speed control during turning, for example, deceleration traveling, which is different from that during straight traveling, can be executed without particular consideration. Not only left and right direction inputs on the joystick 83, but also the vehicle actual speed during operation is reflected in a target vehicle angular velocity calculation block 120. This can change the turning characteristics, depending on the traveling speed of the electric vehicle 1.

In the block diagram of Figure 3, based on the target rotation speeds of the left and right motors 41 (40L and 40R) corresponding to the target vehicle speed v calculated by the target vehicle speed calculation block 110, and on the difference between the target rotation speeds of the left and right motors 41 (40L and 40R) corresponding to the target vehicle angular velocity ω calculated by the target vehicle angular velocity calculation block 120, the target rotation speeds of the left and right motors 41 (40L and 40R) are calculated in a left and right motor target rotation speed calculation block 130.

Furthermore, in the left and right motor required torque calculation block 150, based on the actual rotation speeds of the left and right motors 41 (40L and 40R) detected by the left and right rotation speed sensors 43, and on the target rotation speeds of the left and right motors 41 (40L and 40R), the required torques for the left and right motor are calculated by feedback control (e.g., PID control) that causes the actual rotation speeds of the left and right motors 41 (40L and 40R) to follow the respective target rotation speeds. Based on these, current control for the left and right motors 41 (40L and 40R) is executed.

When the inclination sensor 20 detects a vehicle inclination (pitch angle P, roll angle R) equal to or greater than a predetermined threshold, a compensation torque calculation block 140 calculates a compensation torque in a direction of compensating for the climbing/traveling downhill load applied depending on the pitch angle P and/or the lateral direction load applied depending on the roll angle R, and superimposes the torque on the left and right motor required torques calculated by the left and right motor required torque calculation block 150.

### Control map in riding mode

Incidentally, it has already been mentioned that even in the case of traveling at the same vehicle speed, a user may sometimes feel as if going fast or slow, depending on the proficiency of the user and the travel environment. The electric vehicle 1 according to the present invention is configured to include four sets of control maps (a map 1 to a map 4) with different traveling characteristics including the maximum speed, and allow these control maps to be switched by an operation by the user.

The four sets of control maps (the map 1 to the map 4) include target vehicle speed maps Mv (1 to 4), and target vehicle angular velocity maps Mω (1 to 4), are stored as a look-up table in a ROM area of the control unit 10, and are configured so that the target vehicle speed maps Mv (1 to 4) and the corresponding target vehicle angular velocity maps Mω (1 to 4) are switched as a set by a switch operation, described later.

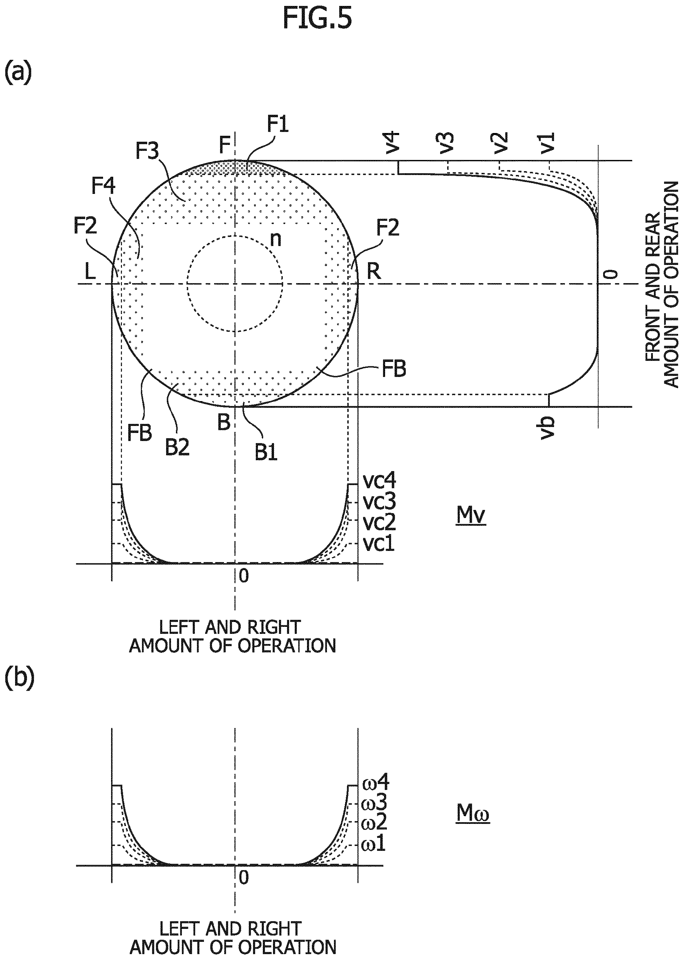

Figure 5(a) shows an example of the target vehicle speed maps Mv (1 to 4). Figure 5(b) shows an example of the target vehicle angular velocity maps Mω (1 to 4).

According to the target vehicle speed maps Mv (1 to 4) shown in Figure 5(a), when the operation position of the joystick 83 is in a forward region F1 including the front end in the operation range, any of target forward speeds v1 to v4 is designated. When the position is in a backward region B1 including the rear end, a target backward speed vb is designated.

That is, the map Mv4 in which the target forward speed (maximum speed) v4 of the electric vehicle 1 is the maximum (e.g., 4 km/h) in a settable range is indicated by solid lines. The map Mv3 with a target forward speed (maximum speed) v3 (e.g., 3 km/h), the map Mv2 with a target forward speed (maximum speed) v2 (e.g., 2 km/h), and the map Mv1 with a target forward speed (maximum speed) v1 (e.g., 1 km/h) are indicated by broken lines. Note that in these maps Mv1 to 4, the target backward speed (maximum backward speed) vb is constant (e.g., 1 km/h).

When the operation position of the joystick 83 is in any of left and right side regions F2 including the left and right ends, any of target forward speeds vc1 to vc4 may be designated. When the position is in a center region n including the center (neutral position), stopping (a target speed of zero) is designated. A transition region F3 in which the target vehicle speed v1 to v4 gradually increases from the center region n toward the forward region F1 is provided between the center region n and the forward region F1.

That is, the map Mv4 with the maximum target forward speed vc4 (e.g., 2 km/h) in a settable range in a case in which the operation position of the joystick 83 is in any of the left and right side regions F2 is indicated by solid lines. The map Mv3 with a target forward speed vc3 (e.g., 1.5 km/h), the map Mv2 with a target forward speed vc2 (e.g., 1 km/h), and the map Mv1 with a target forward speed vc1 (e.g., 0.5 km/h) are indicated by broken lines. Even in the cases in which the operation position of the joystick 83 is in the left and right side regions F2, as described above, the forward speed is provided and transition to the forward turning can be achieved if any of target vehicle angular velocity ω1 to ω4 is designated, as described later, and the steering feeling, such as of an automobile by a steering wheel and a bicycle by handlebars, can be achieved.

Likewise, in the target vehicle angular velocity maps Mω (1 to 4) shown in Figure 5(b), any of the target vehicle angular velocity ω1 to ω4 is designated when the operation position of the joystick 83 is in any of the left and right side regions F2 including the left and right ends in the operation range, and the target vehicle angular velocity of zero is designated when the position is in a center region n including the center (neutral position). Transition regions F4 in which the target vehicle angular velocity ω1 to ω4 gradually increases from the center region n toward the left and right side regions F2 are provided between the center region n and the left and right side regions F2.

That is, the map Mω4 in which the maximum target vehicle angular velocity ω4 (e.g., 150 degrees per second, 2.62 rad/s) is allowed in the settable range in the case in which the operation position of the joystick 83 is in any of the left and right side regions F2, is indicated by solid lines. The map Mω3 with the target vehicle angular velocity ω3 (e.g., 120 degrees per second, 2.09 rad/s), the map Mω2 with the target vehicle angular velocity ω2 (e.g., 90 degrees per second, 1.57 rad/s), and map Mω1 with the target vehicle angular velocity ω1 (e.g., 60 degrees per second, 1.05 rad/s) are indicated by broken lines.

### Control map selection operation in riding mode

When the joystick 83 is specifically operated by the user in the riding mode (1) in the off state of the travel permission switch 84, the electric vehicle 1 including the control maps described above (the map 1 to the map 4: the target vehicle speed maps Mv (1 to 4); the target vehicle angular velocity maps Mω (1 to 4)) activate the speed selection mode 100 as shown in Figure 3, and the control map (the map 1 to the map 4) can be selectively changed.

For example, as shown by symbol 83' in Figure 4, when the joystick 83 is subjected to the tilting operation backward for a predetermined time period (e.g., five seconds) by the user, identifiers (801 to 804) respectively corresponding to the four sets of control maps (the map 1 to the map 4) are sequentially displayed on the display unit 80.

In the example shown, a state in which two of the display segments 80a of the display unit 80 are on (80a') or blinking corresponds to the map 1 (801; the maximum speed of 1 km/h), a state in which four of the display segments 80a of the display unit 80 are on or blinking corresponds to the map 2 (802; the maximum speed of 2 km/h), a state in which six of the display segments 80a of the display unit 80 are on or blinking corresponds to the map 3 (803; the maximum speed of 3 km/h), and a state in which eight of the display segments 80a of the display unit 80 are on or blinking corresponds to the map 4 (804; the maximum speed of 4 km/h). The indication of the identifiers (801 to 804) is switched every constant time period.

When the joystick 83' is returned to the neutral position (83) or autonomously returned to the neutral position (83) by leaving the hand off the joystick 83' with a desired identifier being indicated, the control map (the map 1 to the map 4) corresponding to this identifier is determined, and the selection result is held in the ROM area of the control unit 10, and the speed selection mode 100 is finished. The selection result is maintained until it is changed in the speed selection mode 100 the next time.

### Control flow including control map selection operation

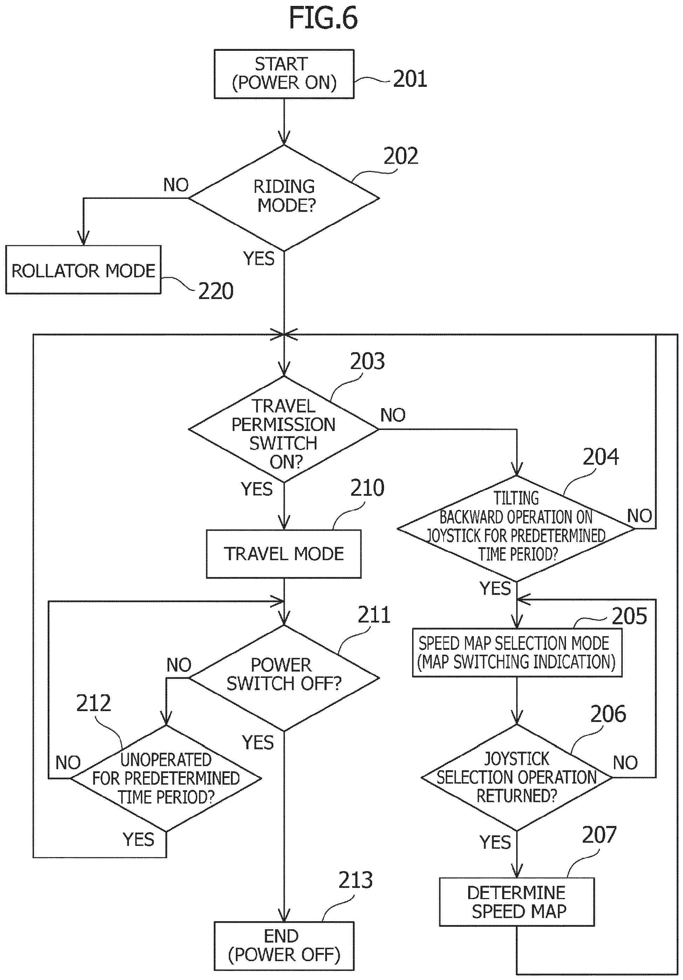

Figure 6 shows a control flow at the time of activation of the electric vehicle 1 that includes the control map selection operation as described above. When the power is turned on by an operation on a key 11 and the system is activated (step 201), which of the rollator mode (1') or the riding mode (1) the electric vehicle 1 is in is determined depending on the frame modal state at the activation (step 202).

When it is determined to be the riding mode (1) (YES in step 202), and in a state of the travel permission switch 84 not being operated (NO in step 203) the joystick 83 is subjected to the tilting operation backward for a predetermined time period (e.g., five seconds) (YES in step 204), a speed map selection mode is activated, and it comes into the switching indication state of the identifiers (801 to 804) corresponding to the control maps (the map 1 to the map 4) (step 205).

When the joystick 83 is returned to the neutral position (YES in step 206) with the desired identifier being indicated, the speed map (the map 1 to the map 4) corresponding to this identifier is determined (step 207).

When the travel permission switch 84 is turned on (YES in step 203) subsequently or after the mode is determined as the riding mode (1) at the first time, locking of the electromagnetic brakes 42 is released, and the electric vehicle 1 comes into a travel mode, and becomes drivable by the operation on the joystick 83 based on a preliminarily selected one of the speed maps (the map 1 to the map 4) (step 210).

When the power is turned off by the key 11 (YES in step 211) in the riding mode (1) of the electric vehicle 1, a predetermined termination control is executed and the power is turned off (step 213). After a predetermined time period elapses with being left unoperated (YES in step 212), the electromagnetic brakes 42 are locked, and the travel mode (step 201) is returned to the stand-by state.

### Operation and advantageous effects based on embodiment

As described above in detail, for the electric vehicle 1 according to the present invention, the joystick 83 is subjected to the tilting operation for the predetermined time period in the riding mode (1) in the off state of the travel permission switch 84, the speed map selection mode is activated, and the speed maps (the map 1 to the map 4) can be changed. Consequently, the traveling characteristics (the maximum speed, the upper limit speed, and the turning characteristics) depending on the proficiency of the user and the traveling environment such as indoor and outdoor conditions and road surface conditions can be easily and securely set by the user.

For example, if the proficiency of the user is low immediately after start of use, any of the speed map (the map 1 and the map 2, etc.) with a low maximum speed is selected, and the speed map is changed to that (the map 3 and the map 4) with a high maximum speed as the proficiency improves, thereby allowing the electric vehicle 1 to be introduced effortlessly.

The electric vehicle 1 has an advantage capable of easily changing the traveling characteristics in conformity with the proficiency and preference of the user, not only in a case of usage as a vehicle dedicated to a person, but also in a case of shared or temporary use among users in public facilities and care facilities or in a case of rental use.

Furthermore, in a case in which a user proficient at operation to some extent selects the speed map with the high maximum speed (map 4), travels on an outdoor pavement surface and the like and subsequently moves indoors, the map is changed to the speed map with the low maximum speed (the map 3, the map 2, etc.). Thus, inconvenience of traveling with the joystick 83 being maintained at the neutral position in order to travel at a low speed in the indoor situation in which the course is often narrow and winding can be resolved.

Since the joystick 83 is used for the speed map selection operation, no dedicated selection switch or the like is required. This is advantageous to reduce cost and can prevent an erroneous operation on a dedicated switch. The speed map selection mode is activated only in the off state of the travel permission switch 84. The speed map selection mode is not activated in the travel mode, i.e., the drivable state. Accordingly, the electric vehicle 1 is not unintentionally started by erroneous recognition as a selection operation while the joystick 83 is used for the speed map selection operation. The speed map is not unintentionally changed during travel of the electric vehicle 1 or in the drivable state.

The speed maps (the map 1 to the map 4) are sequentially displayed by the tilting operation on the joystick 83 in the off state of the travel permission switch 84, and the currently displayed speed map (the map 1 to the map 4) is determined by the operation of returning the joystick 83 to the neutral position. Thus, the selection operation can be executed simply and securely. In the off state of the travel permission switch 84, the electromagnetic brakes 42 are locked. Accordingly, the electric vehicle 1 does not move during the speed map selection operation.

Furthermore, the tilting operation on the joystick 83 for switching the speed map (the map 1 to the map 4) is configured to the tilting operation to the near side of the user, i.e., backward in the front and rear direction of the vehicle. Thus, the joystick 83 is prevented from being unintentionally operated by the body or an arm of the user, baggage or the like. The operation of pulling the joystick 83 to the near side is difficult to execute against user's intent. Even in a case in which the joystick 83 is pulled to the near side owing to possible false recognition as the off state despite the turning on operation on the travel permission switch 84, the problem due to the erroneous operation can be minimized because the backward speed is kept low.

Note that the speed map selection operation is not necessarily limited only to the tilting operation of the joystick 83 backward. An implementation can be adopted in which the speed map selection mode is activated by the tilting operation backward, and subsequently the joystick 83 is operated to the left or right, thereby allowing the speed map (the map 1 to the map 4) to be switched.

In the aforementioned embodiment, the case is described in which the four sets of control maps (the map 1 to the map 4) that include the target vehicle speed maps Mv (1 to 4) and the target vehicle angular velocity maps Mω (1 to 4) are selectively switched. The number of control maps (the map 1 to the map 4) is not limited to four. Alternatively, the number may be two, three, or five or more. It may be configured so that only the target vehicle speed maps Mv (1 to 4) are switched.

In the aforementioned embodiment, a case is described in which forward speed is provided even with the operation of the joystick 83 in the left or right direction for the target vehicle speed maps Mv (1 to 4). Alternatively, it may be configured so that only the target vehicle angular velocity (ω1 to ω4), as shown in Figure 5(b), is provided by the operation of the joystick 83 in the left or right direction.

Further alternatively, instead of selective switching of the control maps (the map 1 to the map 4), only a specific control parameter, such as the maximum speed (upper limit speed) during forward travel or turning may be configured to be selectively switched. It may also be configured so that gains are set to the target vehicle speed and the target vehicle angular velocity during forward travel or turning with respect to the amount of operation on the joystick 83, the gain is selectively switched among several candidates, and the travel characteristics and turning characteristics are selectively switched.

The embodiments of the present invention have been described above. However, the present invention is not limited to the embodiments. Based on the technical concept of the present invention, various modifications and changes can further be made.

For example, in the embodiments described above, the case in which the electric vehicle 1 has the rollator mode has been described. However, the present invention can be implemented as a small electric vehicle or an electric wheelchair that has no rollator mode.

In the embodiments described above, the case of including the omni wheels as driven wheels 5 has been described. Alternatively, caster-type free wheels may be included.

### [Reference Signs List]

- 1: Electric vehicle
- 2: Vehicle body
- 3: Rear handle (rollator mode operation unit)
- 4: Driving wheel (rear wheels)
- 5: Driven wheels (free wheels, front wheels)
- 6: Baggage carrier
- 7: Seat
- 8: Riding mode operation unit
- 9: Battery
- 10: Control unit
- 20: Inclination sensor
- 21: Mobile base
- 22: Upper frame
- 24: Rear-side base
- 25: Front-side base
- 26: Release tag
- 28: Vehicle state detection sensor
- 30: Grip sensor
- 34: Electromagnetic brake release switch
- 40 (40L, 40R): Motor units
- 41: Left and right motors
- 42: Left and right electromagnetic brakes
- 43: Left and right rotation speed sensors
- 80: Display unit
- 82: Armrest
- 83: Joystick (operation element)
- 84: Travel permission switch

## Claims

1. A small electric vehicle (1) comprising:
a vehicle body (2) that has a forward and backward direction and a width direction;
left and right driving wheels (4) provided apart in the width direction of the vehicle body;
free wheels (5) provided apart from the left and right driving wheels in the forward and backward direction of the vehicle body;
left and right motors (40) connected respectively to the left and right driving wheels in an individually power-transmissible manner;
an operation unit (8) that includes a joystick-type operation element (83);
a control unit (10) that controls the left and right motors according to an amount of operation on the operation element; and
a travel permission switch (84) that permits control of the left and right motors through the operation element (83) in a state in which the control unit is activated,
wherein the control unit (10) is configured:
in an on state of the travel permission switch (84), to control the left and right motors (40) based on a target vehicle speed provided by an operation position of the operation element (83); and
in an off state of the travel permission switch (84) and when the operation element (83) is subjected to a tilting operation for a predetermined time period, to activate a control parameter selection mode (100) and allow at least one control parameter including a maximum speed to be changed.

2. The small electric vehicle according to claim 1, further comprising
a display unit (80) for displaying the control parameter in the control parameter selection mode,
wherein the vehicle is configured so that the tilting operation to the operation element (83) causes identifiers of candidates of the control parameter to be sequentially displayed, and an operation of returning the operation element (83) to a neutral position causes determination to be made to the currently displayed candidate.

3. The small electric vehicle according to claim 2,
wherein the display unit (80) includes a light emitter that includes a plurality of display segments (80a), and is configured to digitally display the identifier by a combination of the display segments (80a).

4. The small electric vehicle according to any one of claims 1 to 3,
wherein when the operation element (83) is tilted backward in a front and rear direction of the vehicle in the off state of the travel permission switch, the control parameter selection mode (100) is activated.

5. The small electric vehicle according to any one of claims 1 to 4,
wherein the control unit (10) includes target vehicle speed maps that each define a relationship between the operation position of the operation element (83) and the target vehicle speed, and candidates of the control parameter include a plurality of the target vehicle speed maps having different target maximum speeds.

## Patentansprüche

1. Kleines Elektrofahrzeug (1), welches aufweist:
einen Fahrzeugkörper (2), der eine Vorne- und Hintenrichtung und eine Breitenrichtung aufweist;
linke und rechte Antriebsräder (4), die in der Breitenrichtung des Fahrzeugkörpers mit Abstand voneinander vorgesehen sind;
freie Räder (5), die, in der Vorne- und Hintenrichtung des Fahrzeugkörpers, mit Abstand von den linken und rechten Antriebsrädern vorgesehen sind;
linke und rechte Motoren (40), die jeweils mit den linken und rechten Antriebsrädern in einzeln kraftübertragbarer Weise verbunden sind;
eine Bedienungseinheit (8), die ein Bedienungselement (83) vom Joystick-Typ enthält;
eine Steuereinheit (10), die die linken und rechten Motoren gemäß einem Bedienungsbetrag eines Bedienungselements steuert; und
einen Fahrerlaubnisschalter (84), der die Steuerung der linken und rechten Motoren durch das Bedienungselement (83) in einem Zustand erlaubt, in der die Steuereinheit (10) aktiviert ist,
wobei die Steuereinheit (10) konfiguriert ist:
um in einem Ein-Zustand des Fahrerlaubnisschalters (84) die linken und rechten Motoren (40) basierend auf einer durch eine Bedienungsposition des Bedienungselements (83) bereitgestellten Soll-Fahrzeuggeschwindigkeit zu steuern;
um in einem Aus-Zustand des Fahrerlaubnisschalters (84) und wenn das Bedienungselement (83) für eine vorbestimmte Zeitspanne einer Kippbedienung ausgesetzt wird, einen Steuerparameter-Wählmodus (100) zu aktivieren und zu erlauben, dass zumindest ein eine Maximalgeschwindigkeit enthaltender Steuerparameter geändert wird.

2. Das kleine Elektrofahrzeug nach Anspruch 1, das ferner aufweist:
eine Anzeigeeinheit (80) zum Anzeigen des Steuerparameters im Steuerparameter-Wählmodus,
wobei das Fahrzeug derart konfiguriert ist, dass die Kippbedienung des Bedienungselements (83) bewirkt, dass Identifikatoren von Kandidaten des Steuerparameters sequentiell angezeigt werden, und dass eine Rückkehrbedienung des Bedienungselements (83) zu einer Neutralposition bewirkt, dass an dem gegenwärtig angezeigten Kandidaten eine Bestimmung durchgeführt wird.

3. Das kleine Elektrofahrzeug nach Anspruch 2,
wobei die Anzeigeeinheit (80) einen Lichtemitter enthält, der eine Mehrzahl von Anzeigesegmenten (80a) enthält, und konfiguriert ist, um den Identifikator durch eine Kombination der Anzeigesegmente (80a) digital anzuzeigen.

4. Das kleine Elektrofahrzeug nach einem der Ansprüche 1 bis 3,
wobei, wenn das Bedienungselement (83) in einer Vorne-Hinten-Richtung des Fahrzeugs im Aus-Zustand des Fahrerlaubnisschalters nach hinten gekippt wird, der Steuerparameter-Wählmodus (100) aktiviert wird.

5. Das kleine Elektrofahrzeug nach einem der Ansprüche 1 bis 4,
wobei die Steuereinheit (10) Soll-Fahrzeuggeschwindigkeitskennfelder enthält, die jeweils eine Beziehung zwischen der Bedienungsposition des Bedienungselements (83) und der Soll-Fahrgeschwindigkeit definieren, und Kandidaten des Steuerparameters eine Mehrzahl der Soll-Fahrzeuggeschwindigkeitskennfelder enthalten, die unterschiedliche Soll-Maximalgeschwindigkeiten haben.

## Revendications

1. Petit véhicule électrique (1) comprenant :
une carrosserie de véhicule (2) qui a une direction avant et arrière et une direction de largeur ;
des roues motrices gauche et droite (4) prévues séparément dans la direction de largeur de la carrosserie de véhicule ;
des roues libres (5) prévues séparément des roues motrices gauche et droite dans la direction avant et arrière de la carrosserie de véhicule ;
des moteurs gauche et droit (40) reliés respectivement aux roues motrices gauche et droite d'une manière à transmission d'énergie individuelle ;
une unité fonctionnelle (8) qui comporte un élément fonctionnel de type manette (83) ;
une unité de commande (10) qui commande les moteurs gauche et droit en fonction d'une quantité de fonctionnement sur l'élément fonctionnel ; et
un commutateur d'autorisation de déplacement (84) qui autorise une commande des moteurs gauche et droit par l'intermédiaire de l'élément fonctionnel (83) dans un état dans lequel l'unité de commande est activée,
dans lequel l'unité de commande (10) est configurée :
dans un état passant du commutateur d'autorisation de déplacement (84), pour commander les moteurs gauche et droit (40) sur la base d'une vitesse cible de véhicule prévue par une position fonctionnelle de l'élément fonctionnel (83) ; et
dans un état bloqué du commutateur d'autorisation de déplacement (84) et lorsque l'élément fonctionnel (83) est soumis à une opération d'inclinaison pendant une période de temps prédéterminée, pour activer un mode de sélection de paramètre de commande (100) et permettre de modifier au moins un paramètre de commande comportant une vitesse maximale.

2. Petit véhicule électrique selon la revendication 1, comprenant en outre
une unité d'affichage (80) pour afficher le paramètre de commande dans le mode de sélection de paramètre de commande,
dans lequel le véhicule est configuré de sorte que l'opération d'inclinaison sur l'élément fonctionnel (83) amène des identifiants de candidats du paramètre de commande à être affichés séquentiellement, et une opération de rappel de l'élément fonctionnel (83) vers une position neutre entraîne la réalisation d'une détermination sur le candidat actuellement affiché.

3. Petit véhicule électrique selon la revendication 2,
dans lequel l'unité d'affichage (80) comporte un émetteur de lumière qui comporte une pluralité de segments d'affichage (80a), et est configurée pour afficher numériquement l'identifiant par une combinaison des segments d'affichage (80a).

4. Petit véhicule électrique selon l'une quelconque des revendications 1 à 3,
dans lequel lorsque l'élément de fonctionnement (83) est incliné vers l'arrière dans une direction avant et arrière du véhicule dans l'état bloqué du commutateur d'autorisation de déplacement, le mode de sélection de paramètre de commande (100) est activé.

5. Petit véhicule électrique selon l'une quelconque des revendications 1 à 4,
dans lequel l'unité de commande (10) comporte des cartes de vitesse de véhicule cible qui définissent chacune une relation entre la position fonctionnelle de l'élément fonctionnel (83) et la vitesse de véhicule cible, et des candidats du paramètre de commande comportent une pluralité des cartes de vitesse de véhicule cible ayant des vitesses maximales cibles différentes.
